# EUROPEAN PATENT APPLICATION

(11) **EP 3 855 133 A1**
(43) Date of publication of application: **28.07.2021**
(21) Application number: 21152558.9
(22) Date of filing: 20.01.2021
(51) Int. Cl.: G01F 1/32

(54) **SENSING DEVICE**

(30) Priority: 21.01.2020 JP 2020007349; 22.07.2020 JP 2020125713
(71) Applicant: HOSIDEN CORPORATION, Yao-shi, Osaka 581-0071 (JP)
(72) Inventor: TSUBOTA, Shuhei, Yao-shi, Osaka 581-0071 (JP); NIHO, Hiroki, Yao-shi, Osaka 581-0071 (JP); TANAKA, Akihiro, Yao-shi, Osaka 581-0071 (JP); HANAI, Tadashi, Yao-shi, Osaka 581-0071 (JP)
(74) Representative: Gill Jennings & Every LLP

(57) **Abstract**

The invention provides a sensing device with a reduced number of parts. A sensing device S1 includes a sensitive part 100 and a sensor 200a. The sensitive part 100 includes a sealed internal space 101. At least part of the sensitive part 100 is flexible and configured to be flexed, by a load applied on the sensitive part 100 or by vibration of the sensitive part 100, so as to change an air pressure in the internal space 101. The sensor 200a borders the internal space 101 or is at least partly located in the internal space 101, and includes at least one sensing part configured to detect changes in air pressure in the internal space 101.

## Description

### TECHNICAL FIELD

The present invention relates to sensing devices.

### BACKGROUND ART

Japanese Unexamined Patent Application Publication No. 2003-287451 A discloses a conventional sensing device. The sensing device includes a flexible solid detection rod, a plurality of fiber Bragg gratings (FBGs) on the outer peripheral face of the detection rod at intervals in the circumferential direction, and a plurality of optical fibers connected to the corresponding FBGs. Each FBG reflects light incident from the corresponding optical fiber onto the same optical fiber. When the detection rod is placed into fluid such as to extend substantially perpendicularly to the flow direction of the fluid, the detection rod is bent in the flow direction, and accordingly the FBGs warp. This causes changes in wavelengths of the light reflected by the FBGs in accordance with the flow velocity of the fluid. Based on the amount of change in wavelength of the reflected light, a computing part connected to the sensing device calculates the flow velocity of the fluid.

### SUMMARY OF INVENTION

### Technical Problem

The above sensing device requires the plurality of FBGs and the plurality of optical fibers and therefore includes a large number of parts.

The invention provides a sensing device with a reduced number of parts.

### Solution to Problem

The sensing device of an aspect of the invention includes a sensitive part and a first sensor. The sensitive part includes a sealed internal space. At least part of the sensitive part is flexible and configured to be flexed, by a load applied on the sensitive part or by vibration of the sensitive part, so as to change an air pressure in the internal space. The first sensor borders the internal space or is at least partly housed in the internal space. The first sensor includes at least one sensing part configured to detect changes in the air pressure in the internal space.

The sensing device of this aspect has a reduced number of parts because it only requires at least one sensing part for detecting changes in air pressure in the internal space of the sensitive part.

The sensitive part may further include an opening communicating with the internal space. The first sensor may close the opening and thereby seals the internal space. Alternatively, a separate closing part may be provided to close the opening and thereby seal the internal space.

The sensitive part may include a flexible portion being the at least part of the sensitive part, and a support to support the flexible portion. The internal space may be provided only in the flexible portion, or alternatively in the flexible portion and the support. In the former case, an opening may be further provided in the flexible portion. In the latter case, an opening may be further provided in the support.

Where the flexible portion is provided with the internal space and the opening, the support (corresponding to the above closing part) may close the opening and thereby seal the internal space.

The first sensor may close the opening and, in this state, may be fixed to the support. Alternatively, the first sensor may be fixed to the support closing the opening.

The support may include a base and a support body. The support body may extend from the base to one side in a first direction. The flexible portion may be joined to the support body in the first direction and may extend from the support body to the one side in the first direction.

The internal space may include a distal portion on the one side in the first direction and a basal portion on the other side in the first direction. The basal portion may be larger than the distal portion in area of a cross-section in a second direction. The second direction may be substantially orthogonal to the first direction. However, the invention is not limited to this relationship.

The flexible portion may be made of an elastic material and fits over the support.

Where the flexible portion fits over the support, an outer peripheral face of the support may be provided with a protrusion. The flexible portion may be in elastic contact with the protrusion.

Where the flexible portion fits over the support, the sensing device may further include a gripper configured to hold, from an outside, a portion of the flexible portion that fits over the support.

The flexible portion may be made of metal, synthetic resin, or other material.

Where the first sensor closes the opening, the first sensor may have a closing face to close the opening. The closing face may be, but is not limited to be, a flat face.

The sensing device of any of the above aspects may further include an adapter. The adapter may be fixed directly or indirectly to the base and connectable to a connection target. The adapter may be provided with a through hole extending through the adapter in the first direction.

The support body may be housed in the through hole of the adapter, and at least part of the flexible portion may protrude from the through hole of the adapter to the one side in the first direction.

The sensitive part may further include a pressable portion extending from the flexible portion to the one side in the first direction.

The sensitive part may have either arrangement (1) or (2): (1) the support body is housed in the through hole of the adapter, and at least part of the flexible portion and the pressable portion protrude from the through hole of the adapter to the one side in the first direction; or (2) the support body and the flexible portion are housed in the through hole of the adapter, and the pressable portion protrudes from the through hole of the adapter to the one side in the first direction.

The flexible portion may be positioned out of contact with the adapter.

Where the flexible portion fits over the support, the sensing device may further include a gripper configured to hold, from an outside, a portion of the flexible portion that fits over the support.

The through hole of the adapter may include a housing hole and an insertion hole. The insertion hole may be located on the one side in the first direction relative to, and communicating with, the housing hole. The gripper may be housed in the housing hole. In a cross section along a second direction substantially orthogonal to the first direction, the gripper may have outer dimensions that are smaller than dimensions of the housing hole and larger than dimensions of the insertion hole.

The sensing device of any of the above aspects may further include a bolt. In this case, an outer peripheral face of the base of the support of the sensitive part may be provided with a first thread groove, and an outer peripheral face of the adapter may be provided with a second thread groove. The bolt may be formed with a third thread groove corresponding to the first and second thread grooves. The bolt may be screwed to the base and the adapter so as to fix the adapter indirectly to the support.

The sensing device of any of the above aspects may further include a seal securely sandwiched in the first direction between the base and the adapter. The seal may be vibration-insulating (elastic) to absorb vibration of the adapter. The seal may be replaced with a vibration isolating part (elastic part) configured to absorb vibration of the adapter.

The adapter may include a connecting portion connectable to a connecting pipe of a T-shaped pipe. The T-shaped pipe may be the connection target.

Where at least part of the flexible portion protrudes from the adapter, at least part of the flexible portion may pass through the connecting pipe in a non-contact manner with the connecting portion of the adapter connected to the connecting pipe, and may receive a load from fluid flowing in the T-shaped pipe.

Where the pressable portion protrudes from the adapter, the pressable portion is configured to pass through the connecting pipe in a non-contact manner with the connecting portion of the adapter connected to the connecting pipe, and to receive a load from fluid flowing in the T-shaped pipe.

The sensing device of any of the above aspects may further include a second sensor and a controller.

The second sensor may include at least one sensing part configured to detect acoustic vibration generated around the sensitive part.

The controller may be configured to generate difference data representing differences between characteristic information of the air pressure detected by the at least one sensing part of the first sensor and characteristic information of the acoustic vibration detected by the at least one sensing part of the second sensor.

The controller may include first and second Fourier transformers and a computing part. The first Fourier transformer may be configured to Fourier transform an electric signal outputted from the at least one sensing part of the first sensor and thereby generate a first frequency spectrum. The second Fourier transformers may be configured to Fourier transform an electric signal outputted from the at least one sensing part of the second sensor and thereby generate a second frequency spectrum. The computing part may be configured to obtain differences between the first frequency spectrum and the second frequency spectrum and thereby generate the difference data.

The controller may further include an emphasizing part. The computing part may be configured to identify, based on the difference data, a frequency band of fluctuation of the air pressure in the internal space. The emphasizing part may be configured to raise a level of the frequency band of fluctuation of the air pressure in the internal space and lower levels of the other frequency bands in the difference data.

### Brief Description of Drawings

Fig. 1A is a front, top, right side perspective view of a sensing device according to a first embodiment of the invention.
Fig. 1B is a front, bottom, right side perspective view of the sensing device of the first embodiment.
Fig. 2A is a cross-sectional view of the sensing device of the first embodiment, taken along line 2A-2A in Fig. 1A.
Fig. 2B is a cross-sectional view of the sensing device of the first embodiment, taken along line 2B-2B in Fig. 1A.
Fig. 3A is an exploded, front, top, right side perspective view of the sensing device of the first embodiment.
Fig. 3B is an exploded, front, bottom, right side perspective view of the sensing device of the first embodiment.
Fig. 4 is a cross-sectional view, corresponding to Fig. 2A, of a first variant of the sensing device of the first embodiment.
Fig. 5 is a cross-sectional view, corresponding to Fig. 2B, of a second variant of the sensing device of the first embodiment.
Fig. 6 is a cross-sectional view, corresponding to Fig. 2B, of a third variant of the sensing device of the first embodiment.
Fig. 7 is a cross-sectional view, corresponding to Fig. 2A, of a fourth variant of the sensing device of the first embodiment.
Fig. 8 is a cross-sectional view, corresponding to Fig. 2B, of a fifth variant of the sensing device of the first embodiment.
Fig. 9 is a cross-sectional view, corresponding to Fig. 2A, of a sixth variant of the sensing device of the first embodiment.
Fig. 10A is a front, top, right side perspective view of the sensing device of the first embodiment attached to a T-shaped pipe.
Fig. 10B is a cross-sectional view of the sensing device of the first embodiment and the T-shaped pipe, taken along line 10B-10B in Fig. 10A.
Fig. 11A is a front, top, right side perspective view of a sensing device according to a second embodiment of the invention.
Fig. 11B is a front, bottom, right side perspective view of the sensing device of the second embodiment.
Fig. 12A is a cross-sectional view of the sensing device of the second embodiment, taken along line 12A-12A in Fig. 11A.
Fig. 12B is a cross-sectional view of the sensing device of the second embodiment, taken along line 12B-12B in Fig. 11A.
Fig. 13A is an exploded, front, top, right side perspective view of the sensing device of the second embodiment.
Fig. 13B is an exploded, front, bottom, right side perspective view of the sensing device of the second embodiment.
Fig. 14 is a block diagram of first and second sensors and a controller of the sensing device of the second embodiment.
Fig. 15 is an example of a waveform diagram representing first and second spectrum signals. The first spectrum signal is obtained by Fourier-transforming an electric signal of a microphone of the first sensor of the sensing device of the second embodiment. The second spectrum signal is obtained by Fourier-transforming an electric signal of a microphone of the second sensor of the sensing device.
Fig. 16 is a waveform diagram of a spectrum signal obtained by subtracting the second spectrum signal from the first spectrum signal of the sensing device of the second embodiment.

In the brief description of the drawings above and the description of embodiments which follows, relative spatial terms such as "upper", "lower", "top", "bottom", "left", "right", "front", "rear", etc., are used for the convenience of the skilled reader and refer to the orientation of the sensing devices and their constituent parts as depicted in the drawings. No limitation is intended by use of these terms, either in use of the invention, during its manufacture, shipment, custody, or sale, or during assembly of its constituent parts or when incorporated into or combined with other apparatus.

### DESCRIPTION OF EMBODIMENTS

Various embodiments of the invention, including first and second embodiments and modifications thereof, will now be described. Constituents of the embodiments and the modifications thereof to be described may be combined in any possible manner. Materials, shapes, dimensions, numbers, arrangements, etc. of the constituents of the various aspects of the embodiments and the modifications thereof will be discussed below as examples only and may be modified as long as they achieve similar functions.

### First embodiment

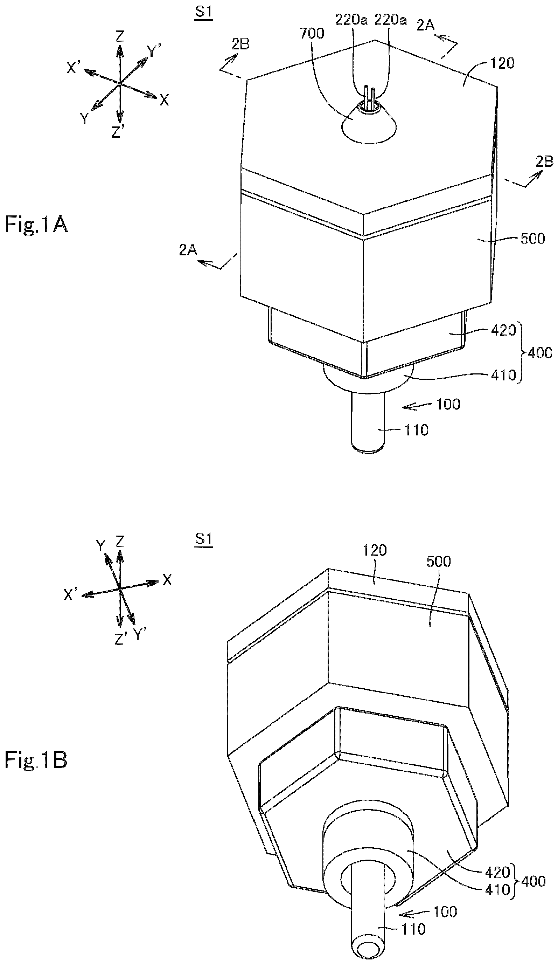

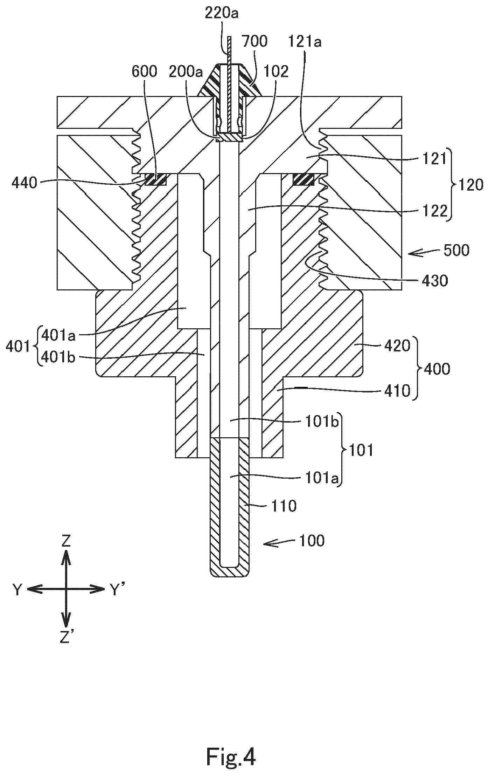

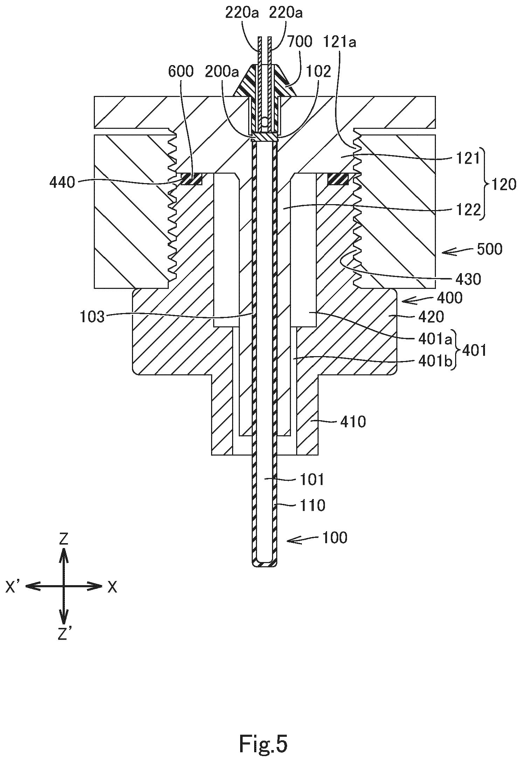

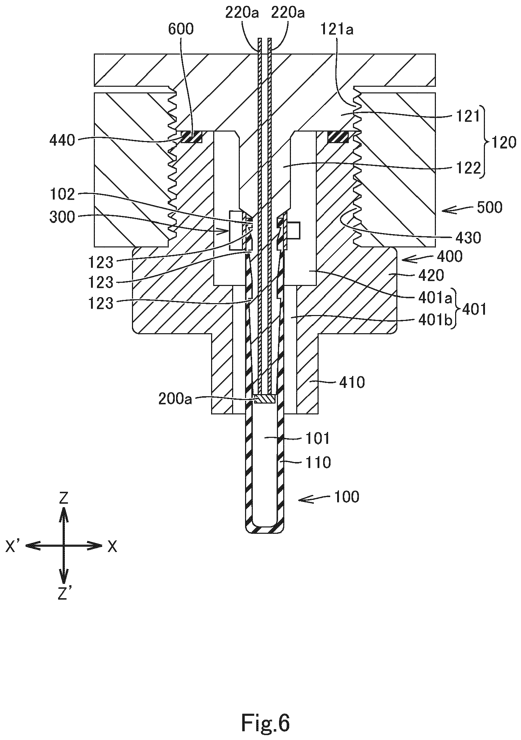

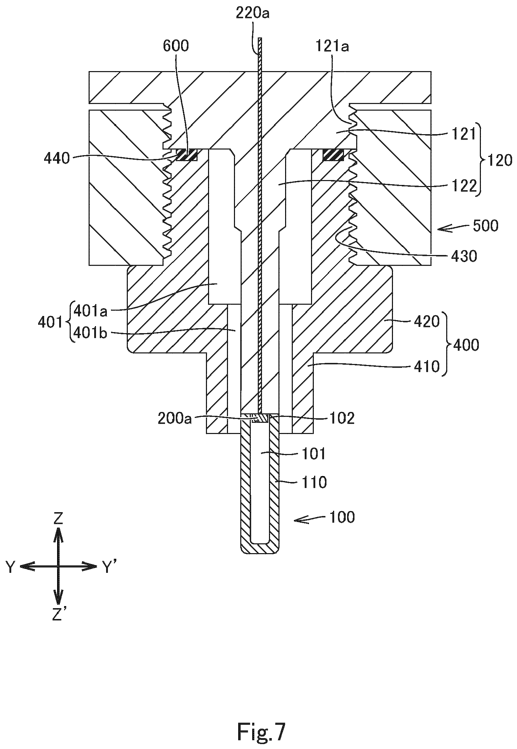

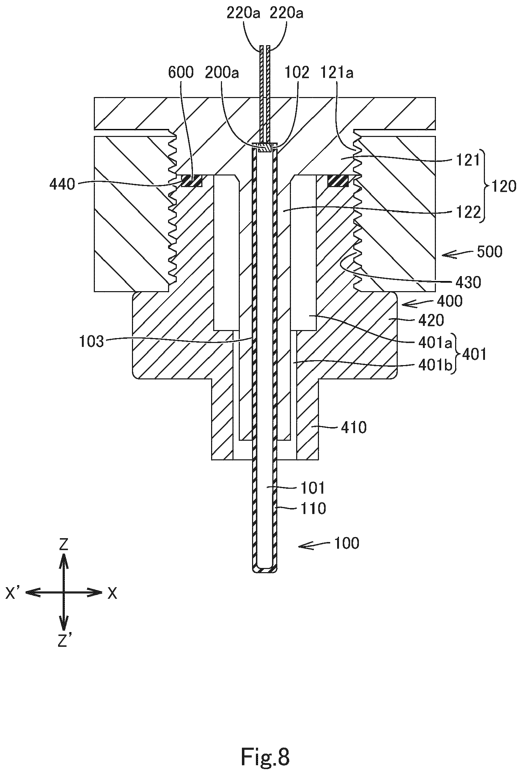

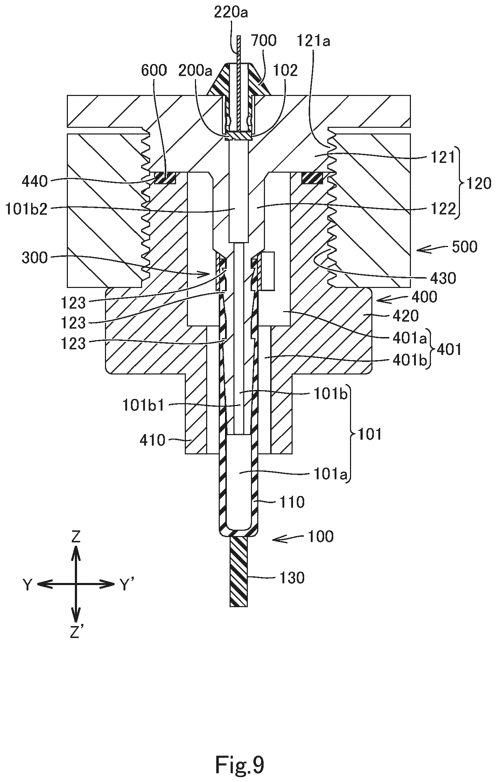

Hereinafter described is a sensing device S1 (which may be referred to simply as a sensing device S1) according to a plurality of embodiments, including a first embodiment and modifications thereof, of the invention, with reference to Figs. 1A to 8. Figs. 1A to 3B show the sensing device S1 of the first embodiment. Fig. 4 shows a first variant of the sensing device S1 of the first embodiment. Fig. 5 shows a second variant of the sensing device S1 of the first embodiment. Fig. 6 shows a third variant of the sensing device S1 of the first embodiment. Fig. 7 shows a fourth variant of the sensing device S 1 of the first embodiment. Fig. 8 shows a fifth variant of the sensing device S1 of the first embodiment. Fig. 9 shows a sixth variant of the sensing device S1 of the first embodiment. Also, Figs. 1A to 9 show a Z-Z' direction (first direction). The Z-Z' direction includes a Z' direction (one side in the first direction) and a Z direction (the other side in the first direction). Figs. 1A to 1B, 2B, 3A, 3B, 5, 6, and 8 show an X-X' direction (second direction) substantially orthogonal to the Z-Z' direction. Figs. 1A to 2A, 3A, 3B, 4 and 7 show a Y-Y' direction substantially orthogonal to the Z-Z' and X-X' directions.

The sensing device S1 includes a sensitive part 100. At least part of the sensitive part 100 is flexible. In other words, the sensitive part 100 includes a flexible portion 110 which corresponds to the at least part of the sensitive part 100. The flexible portion 110 is made of a flexible material, such as an elastic material (e.g., rubber), a metal, a synthetic resin, or the like material. The sensitive part 100 has a sealed internal space 101. The internal space 101 is filled with air or other gas. The sensitive part 100 is configured such that the sensitive part 100 is pressed by a sensing target and the flexible portion 110 flexes so as to change air pressure in the internal space 101 (i.e., vibrate the gas in the internal space 101). The pressures applied onto the sensitive part 100 are thus converted into changes in air pressure in the internal space 101 (vibration of gas in the internal space 101). Where the flexible portion 110 has a higher flexibility, air pressure in the internal space 101 changes to a larger degree, and where the flexible portion 110 has a lower flexibility, air pressure in the internal space 101 changes to a lesser degree.

The flexible portion 110 may extend in the Z-Z' direction, for example. In this case, the Z-Z' direction corresponds to the longitudinal direction of the flexible portion 110. The flexible portion 110 may be bent or curved at least a partly.

The sensing device S1 further includes a sensor 200a (first sensor). The sensor 200a includes at least one microphone (at least one sensing part). The or each microphone may be an electret condenser microphone, a MEMS microphone, or a dynamic microphone, for example. The at least one microphone is configured to collect sound in a frequency band corresponding to the frequencies of changes in air pressure in the internal space 101 (the frequencies of vibration of gas in the internal space 101). The smaller the or each microphone is in outer size, the higher the frequency band of sound to be collected by the or each microphone is. In view of this, where the gas in the internal space 101 vibrates in a higher frequency band, the at least one microphone may preferably be smaller in outer size. For example, the or each microphone having an outer diameter of 4ϕ can collect sound up to about 10 kHz.

The or each microphone is configured to detect changes in air pressure in the internal space 101. For example, the or each microphone may include a diaphragm (not shown) configured to vibrate in response to changes in air pressure in the internal space 101, and vibration of the diaphragm causes changes in an electric signal (for example, voltage) of the microphone. Where air pressure in the internal space 101 changes to a larger degree, the waveform of the electric signal of the or each microphone has a larger amplitude. Where air pressure in the internal space 101 changes to a lesser degree, the waveform of the electric signal of the or each microphone has a smaller amplitude.

The sensor 200a may further include a housing 210a and a plurality of output members 220a. The housing 210a is provided with at least one sound hole 211a communicating with the internal space 101. The output members 220a are terminals, electrodes, lead wires, or the like for outputting electric signals of the at least one microphone to the outside of the sensor 200a. The output members 220a are electrically connectable to a controller of an electronic device. The connected controller is configured to sense changes in air pressure in the internal space 101 (i.e., configured to sense that loads are applied onto the sensor 200a) on the basis of the above-described signals. The controller of the electronic device may be a logic circuit or may be software to be processed by a logic circuit. The controller may be configured to detect the amount of changes in air pressure in the internal space 101 (i.e., configured to detect loads applied to the sensor 200a) on the basis of the amount of changes in the above-described signals. The controller of the electronic device may be may be replaced with a controller included in the sensing device S1 itself.

Where the sensor 200a includes a single microphone, the housing 210a may be the housing of the microphone, the at least one sound hole 211a may be the at least one sound hole of the microphone, and the output members 220a may be the output members of the microphone. The sensor 200a may include a plurality of microphones that are unitized. In this case, the housing 210a may be the housing of the unit, the at least one sound hole 211a may be the at least one sound hole of the microphones or of the unit, and the output members 220a may be the output members of the microphones or of the unit.

The sensitive part 100 may further include an opening 102. The opening 102 communicates with the internal space 101 and opens to the outside of the sensitive part 100. The direction in which the opening 102 opens will be referred to as an opening direction. The opening direction may be, but is not required to be, the Z direction as shown in Figs. 1A to 4. The sensor 200a, or alternatively a closing part, may fit in at least part of the opening 102 from the opening-direction side and thereby close the opening 102. In this case, in a cross section in a direction orthogonal to the opening direction, the sensor 200a or the closing part may have an outer shape corresponding to the shape of the at least part of the opening 102, and the sensor 200a or the closing part may have outer dimensions that are substantially the same as, or slightly larger than, the dimensions of the at least part of the opening 102. Alternatively, the sensor 200a or the closing part may not fit in the opening 102 but be fixed to an outer face of the sensitive part 100 so as to close the opening 102 from the opening-direction side. In either case, the sensor 200a or the closing part closes the opening 102 and thereby seal the internal space 101. In the embodiment shown in Figs. 1A to 4, the opening 102 opens in the Z direction, and the sensor 200a fits in the portion on the Z'-direction side of the opening 102 from the Z-direction side.

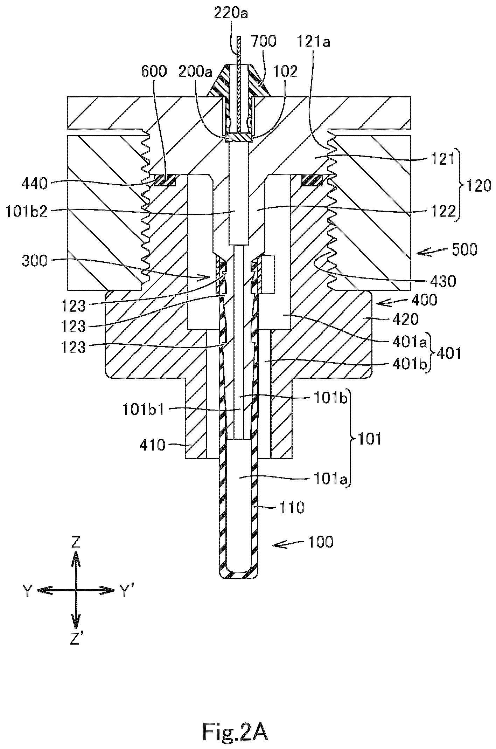

Where the sensor 200a closes the opening 102 (see Figs. 2A to 2B, 4, and 5), the sensor 200a may border the internal space 101 or may be at least partly located in the internal space 101. The output members 220a of the sensor 200a may be led out of the sensitive part 100 through the opening 102. In this case, the sensor 200a has a closing face to close the opening 102. The closing face includes the at least one sound hole 211a. The closing face may be, but is not required to be, a flat face. The closing face of the sensor 200a may face in the Z' direction as shown in Figs. 1A to 4.

Where the closing part closes the opening 102 (see Figs. 6 to 8), the sensor 200a may be located in the internal space 101, and the output members 220a of the sensor 200a may extend through the closing part so as to be led out of the sensitive part 100. In this case, the output members 220a may be embedded in the closing part by insert molding, or may extend through holes in the closing part.

Where the sensitive part 100 does not have the opening 102 (not shown), the sensor 200a may be located in the internal space 101, and the output members 220a of the sensor 200a may extend through a part of the sensitive part 100 so as to be led out of the sensitive part 100. In this case, the output members 220a may be embedded in the sensitive part 100 by insert molding, or may extend through holes in the part of the sensitive part 100.

The sensitive part 100 may further include a support 120. The support 120 may be made of a metal, synthetic resin, or other material that has a higher rigidity than, or substantially the same rigidity as, the flexible portion 110.

The support 120 is only required to support the flexible portion 110. The support 120 may include a base 121 and a support body 122, for example. The support body 122 extends from the base 121 in the Z-Z' direction. The flexible portion 110 is joined to the support body 122 in the Z-Z' direction, and extends from the support body 122 in the Z-Z' direction (i.e., in the Z' direction).

Where the sensitive part 100 includes the flexible portion 110 only, or where the sensitive part 100 includes the flexible portion 110 but not support 120, the internal space 101 may be provided in the flexible portion 110. The flexible portion 110 may be further provided with the opening 102. Where the sensitive part 100 includes both the flexible portion 110 and the support 120, the internal space 101 may be provided only in the flexible portion 110, or in both the flexible portion 110 and the support 120. In the former case, the flexible portion 110 may be further provided with the opening 102. In the latter case, the flexible portion 110 or the support 120 may be further provided with the opening 102.

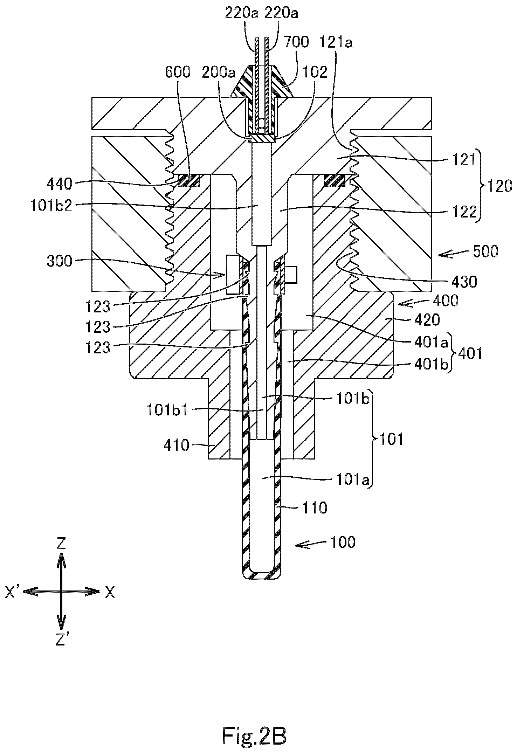

The flexible portion 110, the support 120, and the sensor 200a may, but is not required to, further include any of the following configurations (1) to (6).
(1) The flexible portion 110 is a tube (i.e., circular-section tube or polygonal-section tube) extending in the Z-Z' direction, and the portion on the Z'-direction side is closed and the portion on the Z-direction side opens (See Figs. 1A to 3B). The support body 122 has a columnar or platelike shape. The portion on the Z-direction side of the flexible portion 110 fits over the support body 122, and thus the flexible portion 110 is joined to the support body 122 in the Z-Z' direction. Where the flexible portion 110 is made of an elastic material, the outer peripheral face of the support body 122 may be provided with at least one protrusion 123, and the flexible portion 110 (particularly an end portion on the Z-direction side, for example) may be in elastic contact with the at least one protrusion 123. The or each protrusion 123 may have a barbed shape to prevent the end portion on the Z-direction side of the flexible portion 110 from coming off in the Z' direction. In the embodiment shown in Figs. 2A to 3B, there are a plurality of protrusions 123 of barbed shape. The at least one protrusion 123 may be of any shape and may be omitted. The internal space 101 includes a first space 101a and a second space 101b. The first space 101a is provided in the flexible portion 110. The second space 101b may be provided in the support body 122, and the opening 102 may be provided in the support body 122 and the base 121. Alternatively, the second space 101b may be provided in the support body 122 and the base 121, and the opening 102 may be provided in the base 121. In either case, the second space 101b is located on the Z-direction side relative to, and in communication with, the first space 101a. The opening 102 is located on the Z-direction side relative to, and in communication with, the second space 101b, and opens to the Z-direction side. The sensor 200a may close the opening 102 in any of the above manners, and the sensor 200a may border the internal space 101 or may be at least partly located in the internal space 101. In this case, the sensor 200a may fit in the opening 102 of the support 120 and thereby be fixed to the support 120 (see Figs. 2A to 2B), or alternatively the sensor 200a may be fixed to the outer face of the support 120 to close the opening 102. Still alternatively, the closing part, such as a cap, may be provided to close the opening 102 from the outside of the sensitive part 100, and the sensor 200a may be located in the first space 101a or the second space 101b.
   Where the flexible portion 110, the support 120, and the sensor 200a have configuration (1) described above, the sensing device S1 may further include a gripper 300. The gripper 300 may be a clip made of metal or plastic material configured to grip, from the outside, the portion on the Z-direction side of the flexible portion 110 that fits over the support body 122. Alternatively, the gripper 300 may be a ring made of an elastic material configured to fit over and grip, from the outside, the portion on the Z-direction side of the flexible portion 110 that fits over the support body 122. The gripper 300 can be omitted.
(2) (2-1) The flexible portion 110, the support 120, and the sensor 200a may be configured similarly to those of configuration (1), except that the flexible portion 110 and the support 120 are configured such that the end in the Z direction of the flexible portion 110 is jointed (connected) to the end in the Z' direction of the support body 122 by welding, bonding, adhering, or the like means (see Fig. 4).
(3) The flexible portion 110 is a tube of a similar configuration as that of the flexible portion 110 of configuration (1). The internal space 101 is provided only in the flexible portion 110. A housing hole 103 opening in the Z' direction may be provided in the support body 122, and the opening 102 may be provided in the support body 122 and the base 121 (see Fig. 5). Alternatively, a housing hole 103 opening in the Z' direction may be provided in the support body 122 and the base 121, and the opening 102 may be provided in the base 121. In a cross section in the X-X' direction, the housing hole 103 has a shape corresponding to the outer shape of the flexible portion 110 and has outer dimensions that are substantially the same as, or slightly smaller than, the outer dimensions of the portion on the Z-direction side of the flexible portion 110. The portion on the Z-direction side of the flexible portion 110 fits in the housing hole 103. In any of these cases, the opening 102 is located on the Z-direction side relative to, and in communication with, the housing hole 103, and opens to the Z-direction side. With the portion on the Z-direction side of the flexible portion 110 fitting in the housing hole 103, the opening 102 is located on the Z-direction side relative to, and in communication with, the internal space 101 inside the flexible portion 110. The sensor 200a may close the opening 102 in any of the above manners, and the sensor 200a may border the internal space 101 or may be at least partly located in the internal space 101. In this case, the sensor 200a may fit in the opening 102 of the support 120 and thereby be fixed to the support 120 (see Fig. 5), or alternatively the sensor 200a may be fixed to the outer face of the support 120 to close the opening 102. Still alternatively, the closing part, such as a cap, may be provided to close the opening 102 from the outside of the sensitive part 100, and the sensor 200a may be located in the first space 101a or the second space 101b.
   Where the flexible portion 110 and the support 120 have configuration (1), (2) or (3) described above, the sensing device S1 may further include a cap 700 configured to fit in the portion on the Z-direction side of the opening 102 and prevent the sensor 200a from coming off. The cap 700 may include a leading hole or holes for leading the output members 220a of the sensor 200a to the outside, or alternatively the output members 220a of the sensor 200a may be embedded in the cap 700 by insert molding. The cap 700 can be omitted.
(4) The flexible portion 110 and the support 120 may be configured similarly to those of configuration (1), except that the flexible portion 110 and the support 120 are configured such that (4-1) the support 120 is provided with neither the second space 101b nor the opening 102; (4-2) the flexible portion 110 has an inner space serving as the internal space 101; and (4-3) the portion on the Z-direction side of the flexible portion 110 has an internal space that opens to serve as the opening 102 (see Fig. 6). In this case, the support body 122 serves as the closing part to close the opening 102, with the portion on the Z-direction side of the flexible portion 110 fitting over the support body 122. The sensor 200a is embedded in the support body 122 by insert molding or fixed to an end face on the Z'-direction side of the support body 122, and is located in the internal space 101. In this case, the sensing device S1 may or may not further include the gripper 300.
(5) The flexible portion 110 and the support 120 may be configured similarly to those of configuration (2), except that the flexible portion 110 and the support 120 are configured such that (5-1) the support 120 is provided with neither the second space 101b nor the opening 102; (5-2) the flexible portion 110 has an inner space serving as the internal space 101; and (5-3) the portion on the Z-direction side of the flexible portion 110 has an internal space that opens to serve as the opening 102 (see Fig. 7). In this case, the sensor 200a is embedded in the end portion on the Z'-direction side of the support body 122 by insert molding or fixed to an end face on the Z'-direction side of the support body 122. The sensor 200a may close the opening 102 in any of the above manners, and the sensor 200a may border the internal space 101 or may be at least partly located in the internal space 101. Alternatively, the end face on the Z'-direction side of the support body 122 may serve as the closing part to close the opening 102, and the sensor 200a may be located in the internal space 101.
(6) The flexible portion 110 and the support 120 may be configured similarly to those of configuration (3), except that the flexible portion 110 and the support 120 are configured such that (6-1) the housing hole 103 has a bottom (corresponding to the closing part) closing the Z-direction of the hole; and (6-2) the portion on the Z-direction side of the flexible portion 110 has an internal space that opens to serve as the opening 102 (see Fig. 8). In this case, the sensor 200a is embedded in the bottom of the housing hole 103 of the support 120 by insert molding or fixed to the bottom of the housing hole 103 of the support 120. The sensor 200a may close the opening 102 in any of the above manners, and the sensor 200a may border the internal space 101 or may be at least partly located in the internal space 101. Alternatively, the bottom of the housing hole 103 may serve as the closing part to close the opening 102, and the sensor 200a may be located in the internal space 101.
   The internal space 101 of any of the above aspects incudes a distal portion on the Z'-direction side and a basal portion on the Z-direction side. The basal portion may be larger than the distal portion in area of a cross-section in the X-X' direction. For example, the internal space 101 may have any of the following configurations (a) to (d).
   (a) Where the internal space 101 is provided only in the flexible portion 110, the internal space 101 has a space on the Z'-direction side, which includes the distal portion, and a space on the Z-direction side, which includes the basal portion. The space on the Z-direction side is larger than the space on the Z'-direction side in area of a cross-section in the X-X' direction.
   (b) Where the internal space 101 includes the first space 101a and the second space 101b, the first space 101a includes the distal portion and the second space 101b includes the basal portion. The second space 101b is larger than the first space 101a in area of a cross-section in the X-X' direction. The second space 101b may include a space 101b1 on the Z'-direction side, and a space 101b2 on the Z-direction side which includes the basal portion (see Figs. 2A and 2B). In this case, the space 101b2 may be larger than the first space 101a in area of a cross-section in the X-X' direction. The space 101b1 may be different from (i.e., may be larger or smaller than), or the same as, the space 101b2 in area of a cross-section in the X-X' direction. The second space 101b may be of uniform area in a cross-section in the X-X' direction, from the end in the Z' direction to the end in the Z direction of the second space 101b.
   (c) Whether the internal space 101 is provided only in the flexible portion 110 or includes the first space 101a and the second space 101b, the internal space 101 is of gradually increasing area in a cross-section in the X-X' direction, from the end in the Z' direction to the end in the Z direction of the internal space 101. Also in this case, the basal portion of the internal space 101 is larger than the distal portion of the internal space 101 in area of a cross-section in the X-X' direction.
   (d) Where the internal space 101 includes the first space 101a and the second space 101b, the first space 101a is of uniform area in a cross-section in the X-X' direction, from the end in the Z' direction to the end in the Z direction of the first space 101a; the end in the Z' direction of the second space 101b has an area in cross-section in the X-X' direction that is the same as that of the first space 101a; and the second space 101b is of gradually increasing area in a cross-section in the X-X' direction, from the end in the Z' direction to the end in the Z direction of the second space 101b. Also in this case, the basal portion of the internal space 101 is larger than the distal portion of the internal space 101 in area of a cross-section in the X-X' direction.

Whether the internal space 101 is provided only in the flexible portion 110 or the internal space 101 includes the first space 101a and the second space 101b, the internal space 101 may be of uniform area in a cross-section in the X-X' direction, from the end in the Z' direction to the end in the Z direction of the internal space 101.

The base 121 can be omitted. The support body 122 may have any shape adapted to support the flexible portion 110.

The sensitive part 100 may further include a pressable portion 130 (see Fig. 9). The pressable portion 130 extends in the Z' direction from the flexible portion 110 of any of the above aspects. The pressable portion 130 may be provided separately from, and fixed to, the flexible portion 110, or may be provided integrally with the flexible portion 110. The pressable portion 130 may be, but is not required to be, made of a material having a higher rigidity than the flexible portion 110 (e.g., metal, synthetic resin, etc.).

The pressable portion 130 may be solid (see Fig. 9). Alternatively, the pressable portion 130 may be provided with a third space (not shown). Where the flexible portion 110, the support 120, and the sensor 200a have configuration (1), (2), or (3) described above, the third space may be located on the Z'-direction side relative to, and in communication with, the first space 101a in the flexible portion 110. In this case, the internal space 101 includes the first space 101a, the second space 101b, and the third space. Where the flexible portion 110, the support 120, and the sensor 200a have configuration of (4), (5), or (6) described above, the third space may be located on the Z'-direction side relative to, and in communication with, the space inside the flexible portion 110. In this case, the internal space 101 includes the space inside the flexible portion 110 and the third space.

Where the pressable portion 130 is not provided, the flexible portion 110 of the sensitive part 100 is configured to be pressed by the sensing target from the side of a direction crossing the Z-Z' direction (which will be referred to as a "crossing direction" may particularly be X direction, the X' direction, the Y direction, the Y' direction, an oblique direction including components of the X and Y directions, an oblique direction including components of the X' and Y directions, an oblique direction including components of the X and Y' direction, or an oblique direction including components of the X' and Y' directions). The flexible portion 110 is configured to be pressed by the sensing target from the crossing-direction side (subjected to a load) and thereby flex so as to change the air pressure in the internal space 101. Where the pressable portion 130 is provided, the pressable portion 130 of the sensitive part 100 is configured to be pressed by the sensing target from the crossing-direction side (subjected to a load) and thereby flex so as to change the air pressure in the internal space 101.

The sensing device S1 may further include an adapter 400. The adapter 400 is made of metal or synthetic resin. The adapter 400 is provided with a through hole 401 extending through the adapter 400 in the Z-Z' direction.

Where the pressable portion 130 is not provided, the through hole 401 has a dimension in the Z-Z' direction that is smaller than the sum of the dimension in the Z-Z' direction of the flexible portion 110 and the dimension in the Z-Z' direction of the support body 122. The support body 122 and the portion on the Z-direction side of the flexible portion 110 may be located in the through hole 401, and the portion on the Z'-direction side of the flexible portion 110 may protrude from the through hole 401 in the Z' direction. Alternatively, the support body 122 may be located in the through hole 401, and the entire flexible portion 110 may protrude from the through hole 401 in the Z' direction.

Where the pressable portion 130 is provided, the dimension in the Z-Z' direction of the through hole 401 is smaller than the sum of the dimension in the Z-Z' direction of the pressable portion 130, the dimension in the Z-Z' direction of the flexible portion 110, and the dimension in the Z-Z' direction of the support body 122. The support body 122 and the portion on the Z-direction side of the flexible portion 110 may be located in the through hole 401, and the pressable portion 130 and the portion on the Z'-direction side of the flexible portion 110 may protrude from the through hole 401 in the Z' direction. Alternatively, the support body 122 may be located in the through hole 401, and the pressable portion 130 and the flexible portion 110 may protrude from the through hole 401 in the Z' direction. Still alternatively, the support body 122 and the flexible portion 110 may be located in the through hole 401, and the pressable portion 130 may protrude from the through hole 401 in the Z' direction.

Where the gripper 300 is provided, the through hole 401 includes a housing hole 401a and an insertion hole 401b. In a cross section in the X-X' direction, the housing hole 401a have dimensions that are larger than the outer dimensions of the gripper 300. The housing hole 401a has a dimension in the Z-Z' direction that is larger than that of the gripper 300. The housing hole 401a houses the gripper 300. The insertion hole 401b is located on the Z'-direction side relative to, and in communication with, the housing hole 401a. In a cross section in the X-X' direction, the insertion hole 401b have dimensions that are larger than the outer dimensions of the gripper 300. With these dimensional relationships, even if the gripper 300 comes off from the flexible portion 110, it is retained in the housing hole 401a.

In a cross section in the X-X' direction, the through hole 401 may have dimensions that are larger than the outer dimensions of the flexible portion 110. This allows the perimeter of the through hole 401 to be positioned out of contact with the flexible portion 110. In other words, the adapter 400 may be positioned out of contact with the flexible portion 110. Alternatively, in a cross section in the X-X' direction, at least part of the through hole 401 may have a shape corresponding to the outer shape of the flexible portion 110, and may have dimensions that are substantially the same as, or slightly smaller than, the outer dimensions of the flexible portion 110. With these dimensional relationships, the flexible portion 110 fits in the at least part of the through hole 401.

The adapter 400 includes a connecting portion 410 and a fixing portion 420. The connecting portion 410 extends from the fixing portion 420 in the Z' direction. The connecting portion 410 is connectable to a connection target. For example, the connecting portion 410 may be configured to fit in a connecting hole in the connection target, or may be configured to be screwed into a screw hole in the connection target. In the former case, in a cross section in the X-X' direction, the connecting portion 410 may have an outer shape that corresponds to the shape of the connecting hole of the connection target, and the connecting portion 410 may have outer dimensions that are substantially the same as, or slightly larger than, the dimensions of the connecting hole of the connection target. In the latter case, the outer peripheral face of the connecting portion 410 may be formed with a thread groove, and the inner peripheral face of the connecting hole may be formed with a thread groove corresponding to the thread groove of the connecting portion 410. Alternatively, the through hole 401 in the connecting portion 410 may serve as the connecting hole or screw hole for connection with a connection target and may be configured to fittingly or threadingly receive a tubular connecting portion of the connection target.

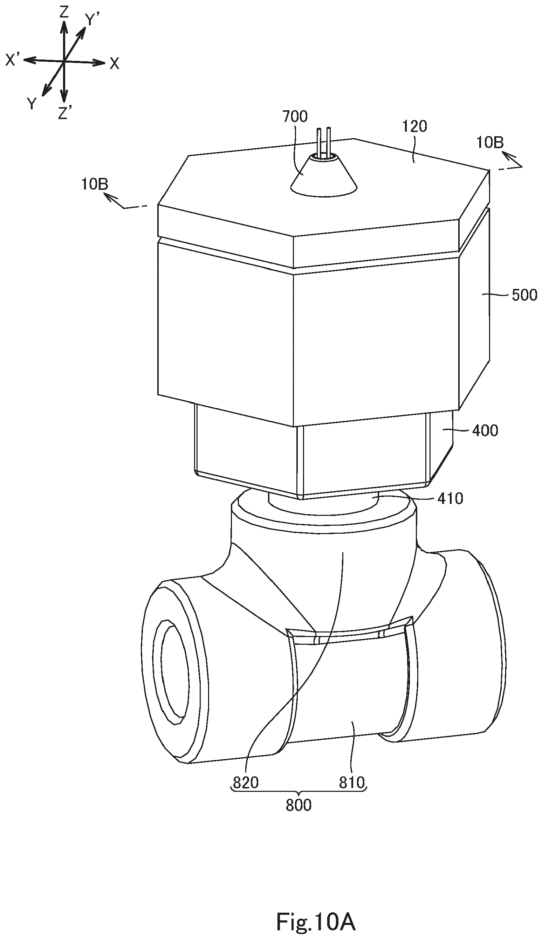

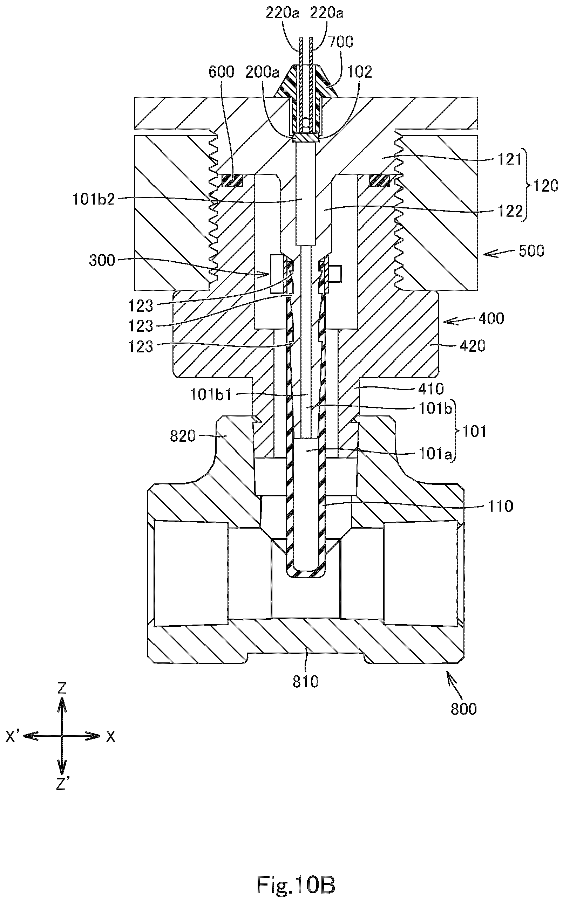

The connection target can be a T-shaped pipe 800 (see Figs. 10A and 10B), for example. The T-shaped pipe 800 includes a pipe body 810 and a connecting pipe 820. The inside of the pipe body 810 forms a flow channel to flow fluid (e.g., liquid, gas, or other flowable substance) in the X-X' direction. The fluid is the sensing target. The connecting pipe 820 extends in the Z direction from the pipe body 810, and the inside of the connecting pipe 820 forms a hole communicating with the flow channel of the pipe body 810. The hole of the connecting pipe 820 may serve as the connection hole for connection with the connecting portion 410. The connecting hole of the connecting pipe 820 may be configured to fittingly or threadedly receive the connecting portion 410 from the Z-direction side. For convenience of description, a "connection state" will refer to a state in which the T-shaped pipe 800 is connected to the connecting portion 410.

Where the pressable portion 130 is not provided, in the connection state, at least part of the flexible portion 110 protruding from the connecting portion 410 may be received in the flow channel of the pipe body 810 through the connecting hole of the connecting pipe 820 without contacting the T-shaped pipe 800. In this case, the at least part of the flexible portion 110 protruding from the connecting portion 410 passes through the connecting hole of the connecting pipe 820. The at least part of the flexible portion 110 is pressed by fluid flowing in the flow channel and flexes.

The least part of the flexible portion 110 may be of arcuate or V-shape projecting in the X direction. In this case, if fluid flows in the X direction in the flow channel, the fluid applies a larger load onto the flexible portion 110, and the flexible portion 110 flexes to a larger degree. Accordingly, the air pressure in the internal space 101 changes to a larger degree, resulting in a larger amplitude of the waveform of an electric signal of the at least one microphone of the sensor 200a. On the other hand, if fluid flows in the X' direction in the flow channel, the fluid applies a smaller load onto the flexible portion 110, and the flexible portion 110 flexes to a lesser degree. Accordingly, the air pressure in the internal space 101 changes to a lesser degree, resulting in a smaller amplitude of the waveform of an electric signal of the at least one microphone of the sensor 200a. The controller is configured to monitor the amplitude of the signal waveform. Where the amplitude of the signal waveform exceeds a first threshold stored in a memory in the controller, the controller determines that the fluid flows in the X direction. Where the amplitude is equal to, or less than, a second threshold stored in a memory in the controller, the controller determines that the fluid flows in the X' direction.

Where the pressable portion 130 is provided, in the connection state, the pressable portion 130 protruding from the connecting portion 410 may be received in the flow channel of the pipe body 810 through the connecting hole of the connecting pipe 820 without contacting the T-shaped pipe 800. In this case, the pressable portion 130 protruding from the connecting portion 410 passes through the connecting hole of the connecting pipe 820. The pressable portion 130 is pressed by fluid flowing in the flow channel and flexes. The pressable portion 130 may also may be of arcuate or V-shape projecting in the X direction in order to estimate the flow direction of fluid.

A connection target may not be the T-shaped pipe 800 but may be an electronic device. In this case, the sensing target may be a plunger, a gear, or other a movable part in an electronic device, a touch sensor to be pressed by a finger of a user, or the like. Such a moving part or touch sensor may be in direct or indirect contact with the flexible portion 110 from the crossing-direction side, with the connecting portion 410 connected to the connection target.

The fixing portion 420 may be indirectly fixed to the base 121. In this case, the sensing device S1 may further include a bolt 500. In this case, the outer peripheral face of the base 121 is formed with a first thread groove 121a, the outer peripheral face of the adapter 400 is formed with a second thread groove 430, and the inner peripheral face of the bolt 500 is formed with a third thread groove corresponding to the first thread groove 121a and the second thread groove 430. The bolt 500 is screwed to the base 121 and the adapter 400. Alternatively, the fixing portion 420 may be directly fixed to the base 121. In this case, the inner peripheral face of the through hole 401 of the fixing portion 420 may be formed with a fourth thread groove, the outer peripheral face of the base 121 may be formed with a fifth thread groove corresponding to the fourth thread groove, and the fixing portion 420 may be screwed to the base 121. Alternatively, one of the fixing portion 420 or the base 121 is provided with an engaging projection, and the other is provided with an engaging recess. The engaging projection is engaged with the engaging recess to directly fix the fixing portion 420 to the base 121. Alternatively, the fixing portion 420 may be directly fixed to the base 121 by bonding, welding, or other method. Still alternatively, the fixing portion 420 may be screwed to, and directly fixed to, the base 121.

The sensing device S1 may further include a seal 600. The seal 600 is an annular member of elastic material, such as rubber. The seal 600 is securely sandwiched in the Z-Z' direction between the base 121 and the adapter 400, with the adapter 400 fixed to the base 121 indirectly or directly. The seal 600 may be, but is not required to be, compressed between the base 121 and the adapter 400. The seal 600 may be vibration-insulating (elastic) to absorb vibration of the adapter 400. A housing recess 440 for housing the seal 600 may be, but is not required to be, provided along the peripheral edge on the Z-direction side of the through hole 401 of the adapter 400. The seal 600 may be replaced with a vibration isolating part (elastic part) configured to absorb vibration of the adapter 400.

The adapter 400 and/or the seal 600 can be omitted. Where the adapter 400 is omitted, the flexible portion 110 or the support 120 of the sensitive part 100 may be configured to be connected or fixed to the connection target.

The sensing device S1 as described above provides at least the following technical features and effects.
First, the sensing device S1 has a reduced number of parts. This is because the sensor 200a only requires the at least one microphone for detecting changes in air pressure in the internal space 101 of the sensitive part 100. Further, where the sensor 200a closes the opening 102, the internal space 101 of the sensitive part 100 is sealed by the sensor 200a, so that the sensing device S1 has a reduced number of parts, compared with the case where the opening 102 is closed by an additional part. Also where the support 120 closes the opening 102, the internal space 101 of the sensitive part 100 is sealed by the support 120, so that the sensing device S1 has a reduced number of parts, compared with the case where the opening 102 is closed by an additional part.
Second, where the sensor 200a is supported by the support 120 and closes the opening 102, the sensing device S1 is easier to assemble. This is because, simply by fixing the flexible portion 110 to the support 120, the sensor 200a seals the internal space 101 of the sensitive part 100, and is arranged such as to border the internal space 101 or at least partly located in the internal space 101.
Thirdly, the sensing device S1 is easier to assemble also where the sensor 200a is fixed to the support 120 and the support 120 closes the opening 102 of the flexible portion 110. This is because, simply by fixing the flexible portion 110 to the support 120 fixed to the sensor 200a, the support 120 seals the internal space 101 of the sensitive part 100, and the sensor 200a is arranged so as to border the internal space 101 or at least partly located in the internal space 101.
Fourth, if the flexible portion 110 is in contact with the adapter 400, such a contacting part would be subjected to load due to the flexing of the flexible portion 110. However, where the flexible portion 110 is not in contact with the adapter 400, the flexible portion 110 will not be subjected to load due to the flexing of the flexible portion 110.

### Second embodiment

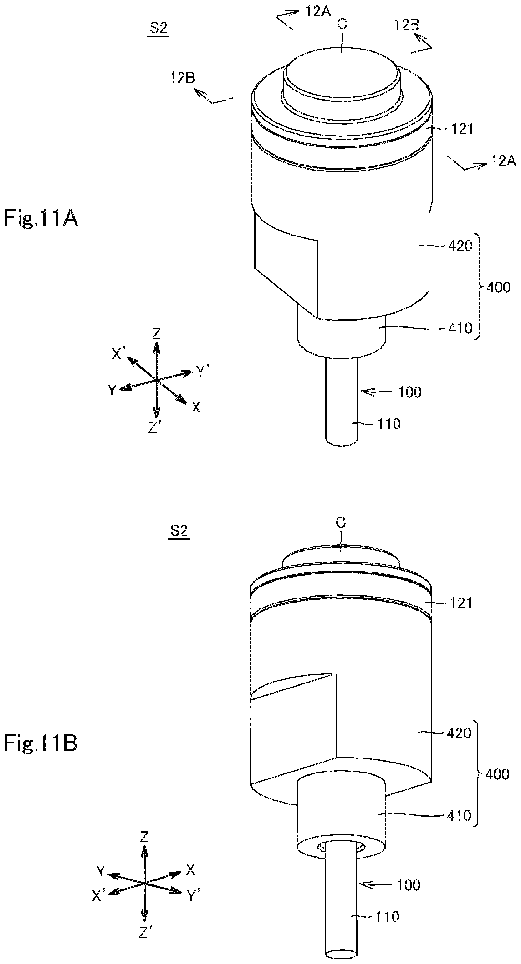

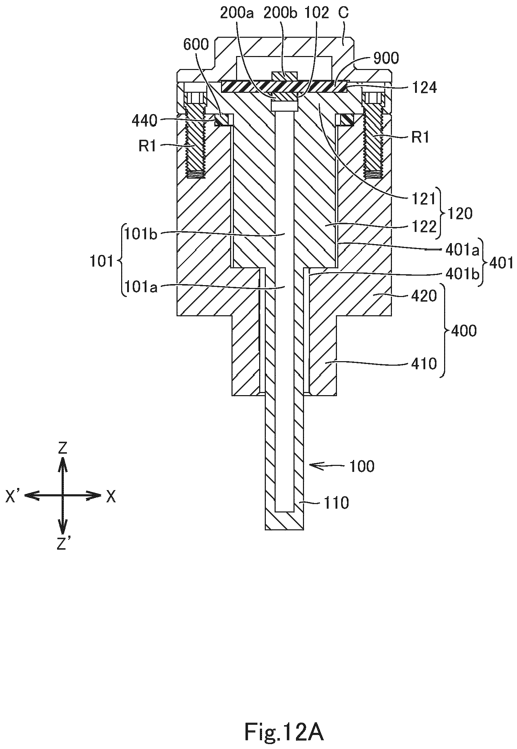

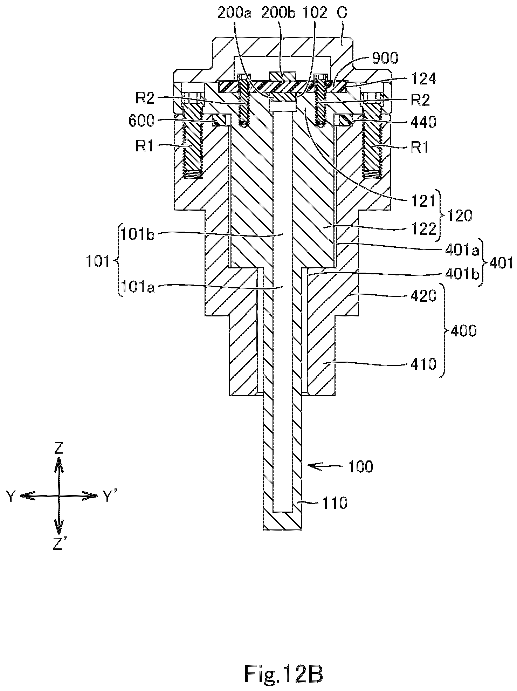

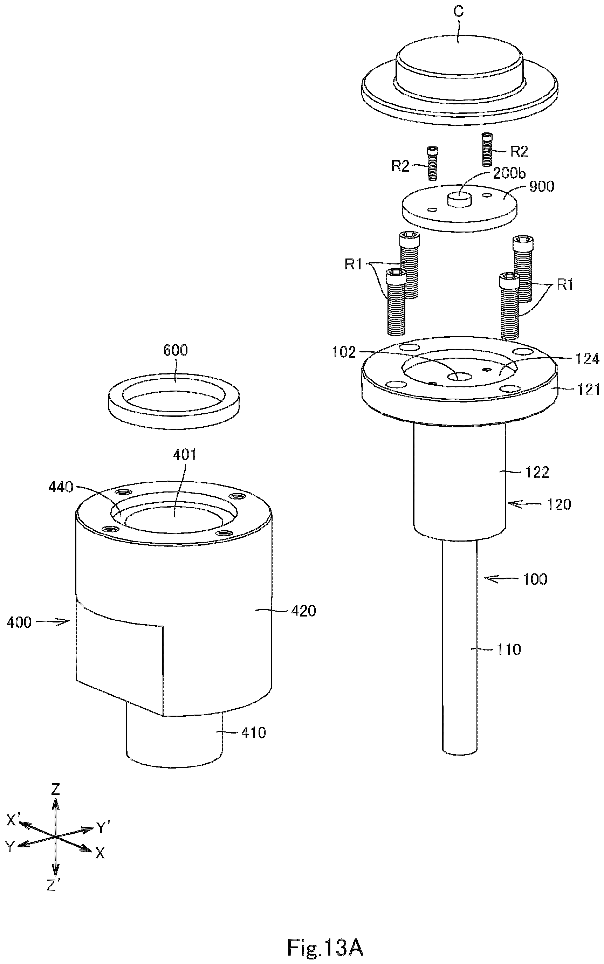

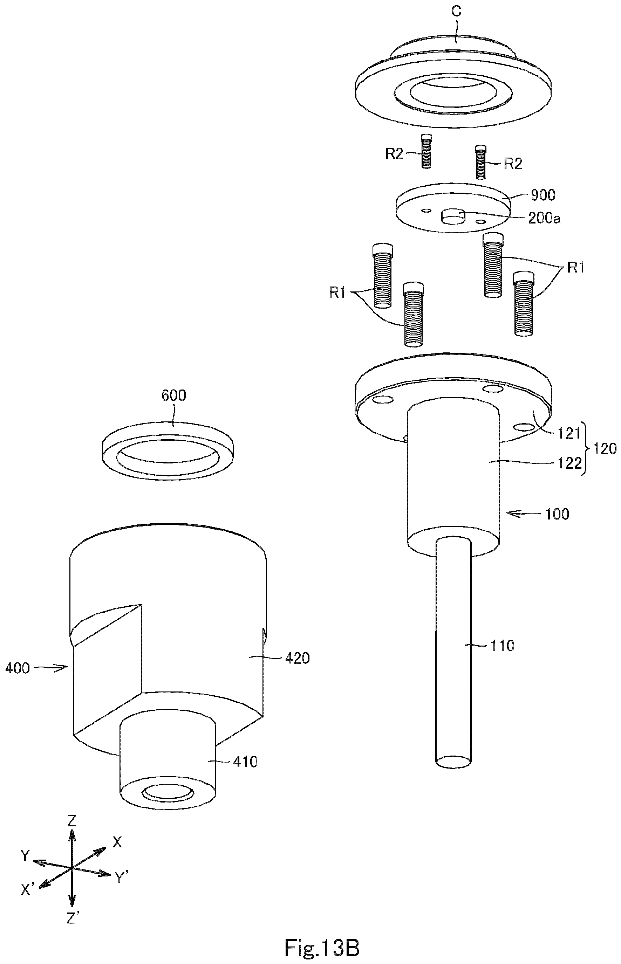

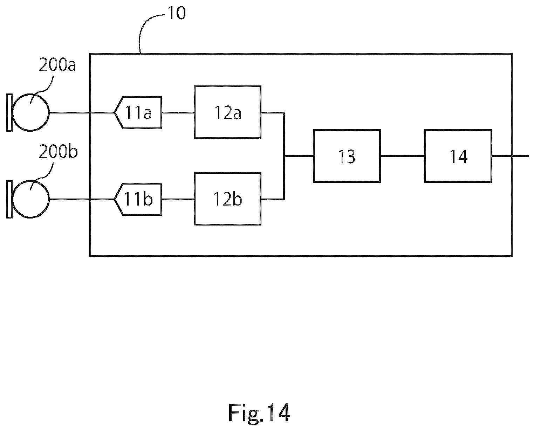

Hereinafter described is a sensing device S2 (which may be referred to simply as a sensing device S2) according a plurality of embodiments, including a second embodiment and modifications thereof, of the invention, with reference to Figs. 11A to 16. Figs. 11A to 14 show the sensing device S2 of the second embodiment. Figs. 11A to 13B show the Z-Z' direction, as in the sensing device S1. Figs. 11A, 11B, 12B, 13A, and 13B show the X-X' direction, as in the sensing device S1. Figs. 11A, 11B, 12A, 13A, and 13B show the Y-Y' direction, as in the sensing device S1.

The sensing device S2 may have a similar configuration to that of the sensing device S1, except that the sensing device S2 is further provided with a sensor 200b (second sensor). The sensing device S2 will now be described focusing on the differences from the sensing device S1 and omitting overlapping descriptions.

The sensitive part 100 of the sensing device S2 may, but is not required to, have the same or a similar configuration to that of the sensitive part 100 of the sensing device S1.

For example, where the sensitive part 100 includes the support 120, the flexible portion 110 of the sensitive part 100 may not be joined to the support body 122 of the support 120 but integrally and contiguously connected to the support body 122 (see Figs. 11A to 13B). In other words, the flexible portion 110 may extend in the Z' direction from the end in the Z' direction of the support body 122. In a cross section in the X-X' direction, the support body 122 may have outer dimensions that are larger than, or substantially the same as, the outer dimensions of the flexible portion 110.

The internal space 101 of the sensitive part 100 may have the first space 101a only. The first space 101a is provided in the flexible portion 110 of the sensitive part 100. In this case, the opening 102 is provided in the support body 122 and the base 121 and located on the Z-direction side relative to, and in communication with, the first space 101a, and opens to the Z-direction side.

The internal space 101 of the sensitive part 100 may have a second space 101b in addition to the first space 101a. In this case, the second space 101b may be provided in the support body 122, and the opening 102 may be provided in the support body 122 and the base 121. Alternatively, the second space 101b may be provided in the support body 122 and the base 121, and the opening 102 may be provided in the base 121. In either case, the second space 101b is located on the Z-direction side relative to, and in communication with, the first space 101a. The opening 102 is located on the Z-direction side relative to, and in communication with, the second space 101b, and opens to the Z-direction side.

Whether the flexible portion 110 is joined or contiguously connected to the support body 122 of the support 120, the pressable portion 130 (see Fig. 9 for illustration) may extend in the Z' direction from the flexible portion 110. The pressable portion 130 can be omitted also form the sensing device S2.

The adapter 400 of the sensing device S2 may have the same configuration as the adapter 400 of the sensing device S1. Accordingly, the connecting portion 410 of the adapter 400 of the sensing device S2 may be connectable to a connection target, such as the T-shaped pipe 800, in the same or a similar manner to the connecting portion 410 of the adapter 400 of the sensing device S1. The through hole 401 of the adapter 400 of the sensing device S2 may include a housing hole 401a and an insertion hole 401b. In this case, in a cross section in the X-X' direction, the housing hole 401a have dimensions that are larger than the outer dimensions of the support body 122 of the support 120; and the housing hole 401a has a dimension in the Z-Z' direction that is larger than that of the support body 122 of the support 120. The housing hole 401a houses the support body 122 of the support 120. The perimeter of the housing hole 401a of the adapter 400 may be located with an interstice to the support body 122. In other words, the perimeter of the housing hole 401a of the adapter 400 may be positioned out of contact with the support body 122, but may be in contact with the support body 122. The insertion hole 401b is located on the Z'-direction side relative to, and in communication with, the housing hole 401a. In a cross section in the X-X' direction, the insertion hole 401b have dimensions that are larger than the outer dimensions of the flexible portion 110. The housing hole 401a has a dimension in the Z-Z' direction that is smaller than that of the flexible portion 110. The portion on the Z'-direction side of the flexible portion 110 protrudes from the insertion hole 401b in the Z' direction. The wall of the insertion hole 401b of the adapter 400 may be located with an interstice to the flexible portion 110. In other words, the wall of the insertion hole 401b of the adapter 400 may be positioned out of contact with the flexible portion 110, but may be in contact with the flexible portion 110.

The sensing device S2 may or may include a bolt 500 (see Figs. 1A to 3 for illustration). Where the bolt 500 is not provided, the fixing portion 420 of the adapter 400 of the sensing device S2 may be located on the Z'-direction side relative to the base 121 and fixed to the base 121 with screws R1 (see Figs. 11A to 13B).

The sensor 200a of the sensing device S2 may have the same or a similar configuration to that of the sensor 200a of the sensing device S1.

The sensor 200b of the sensing device S2 includes at least one microphone (at least one sensing part). The or each microphone may be an electret condenser microphone, a MEMS microphone, or a dynamic microphone, for example. The at least one microphone is configured to collect sound in a frequency band corresponding to the frequencies of acoustic vibration (noise) generated around the sensitive part 100.

The or each microphone is configured to detect acoustic vibration generated around the sensitive part 100. For example, the or each microphone may include a diaphragm (not shown) configured to vibrate in response to acoustic vibration generated around the sensitive part 100, and vibration of the diaphragm causes changes in an electric signal (for example, voltage) of the microphone.

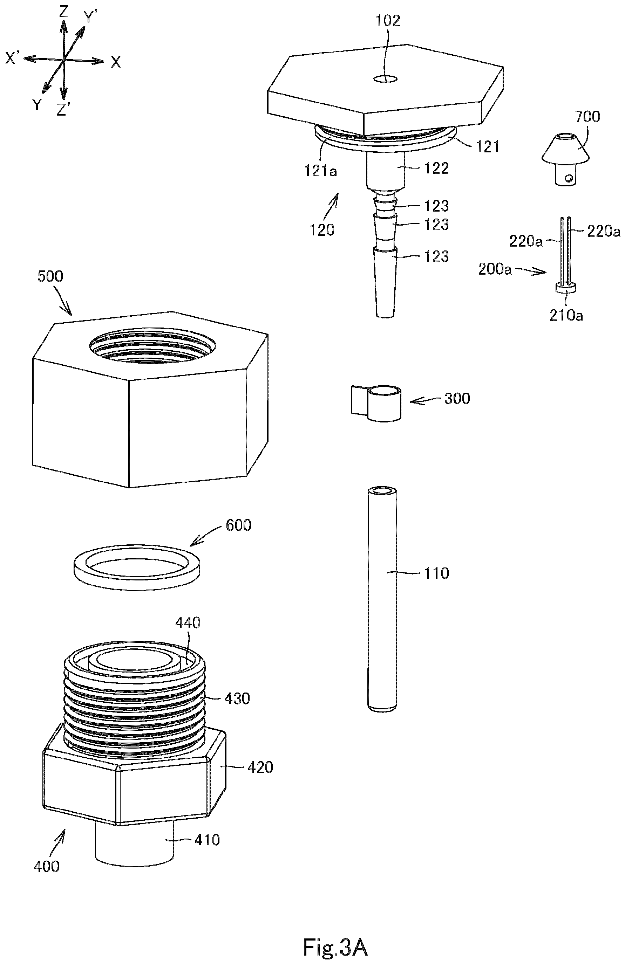

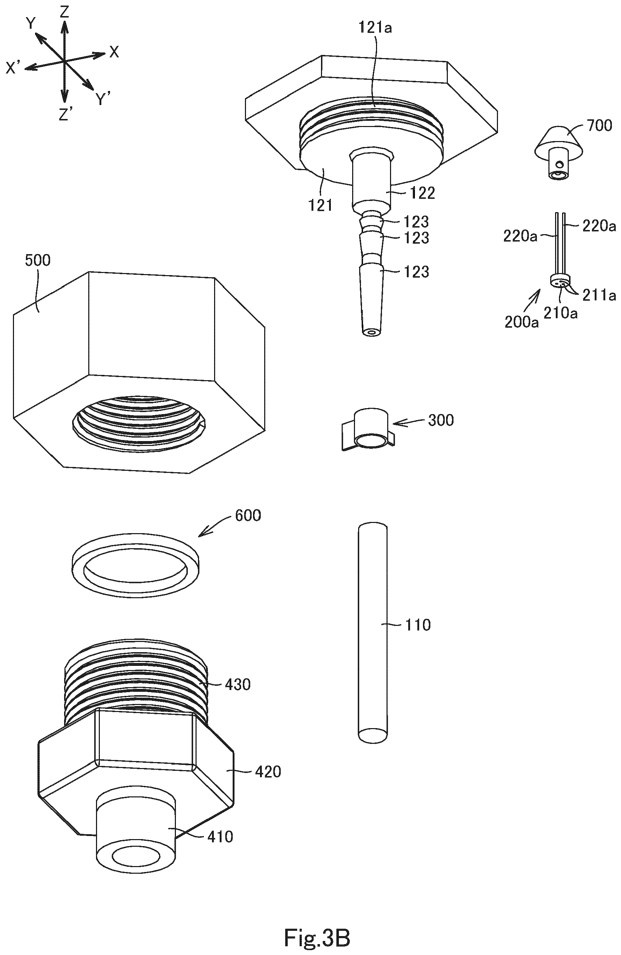

The sensor 200b may further include a housing and a plurality of output members. The housing is provided with at least one sound hole (not shown), and the sensor 200b may be arranged such that the at least one sound hole faces an area around the sensitive part 100. For example, the sensor 200b may be arranged such that at least one sound hole thereof faces in a direction (e.g., the Z direction) opposite to the direction in which the at least one sound hole 211a (see Fig. 3B for illustration) of the sensor 200a faces. The output members of the sensor 200b are terminals, electrodes, lead wires, or the like for outputting a signal from the at least one microphone to the outside of the sensor 200b.

Where the sensor 200b includes a single microphone, the housing of the sensor 200b may be the housing of the microphone, and the at least one sound hole of the sensor 200b may be the at least one sound hole of the microphone, and the output members of the sensor 200b may be the output members of the microphone. The sensor 200b may include a plurality of microphones that are unitized. In this case, the housing of the sensor 200b may be the housing of the unit, at least one sound hole of the sensor 200b may be the sound hole of the microphone or of the unit, and the output members of the sensor 200b may be the output members of the microphones or of the unit.

The sensing device S2 may further include a substrate 900. The substrate 900 has a first face on the Z'-direction side and a second face on the Z-direction side. The sensor 200a is mounted on the first face of the substrate 900, and the output members 220a of the sensor 200a are connected to surface electrodes on the first face of the substrate 900 or to through-hole electrodes in the first face of the substrate 900. The sensor 200b is mounted on the second face of the substrate 900, and the output members of the sensor 200b is connected to surface electrodes on the second face of the substrate 900 or through-hole electrodes in the second face of the substrate 900. Via the substrate 900, the sensor 200a and the sensor 200b are electrically connected to the controller of the electronic device or to a controller 10 of the sensing device S2. The substrate 900 may be fixed to the support 120 of the sensitive part 100 such that the sensor 200a of the sensing device S2, similarly to the sensor 200a of the sensing device S1, closes the opening 102 of the sensitive part 100 from the Z-direction side, and borders or is at least partly located in the internal space 101. Alternatively, the substrate 900 may close the opening 102 of the sensitive part 100 from the Z-direction side and be fixed to the support 120 of the sensitive part 100 such that the sensor 200a of the sensing device S2 borders the internal space 101 through the opening 102 or is at least partly located in the internal space 101. The substrate 900 may be fixed to the support 120 of the sensitive part 100. Particularly, the substrate 900 may be screwed to the support 120 with screws R2 or/and fit in a housing recess 124 of the support 120. The housing recess 124 may be provided in the base 121, on the Z-direction side relative to the opening 102, and may open to the Z-direction side. The housing recess 124 can be omitted.

The substrate 900 can be omitted. Where the substrate 900 is omitted, the sensor 200b may be fixed to the sensitive part 100. For example, the sensor 200b may be fixed on the face on the Z-direction side of the base 121 of the sensitive part 100. In this case, the output members of the sensor 200a and the sensor 200b are electrically connectable to the controller of the electronic device or the controller 10 of the sensing device S2.

The sensing device S2 may further include a cover C. Where the substrate 900 is provided, the cover C is fixed to the base 121 of the support 120 such as to cover the sensor 200b and the substrate 900 from the Z-direction side. Where the substrate 900 is not provided, the cover C is fixed to the base 121 of the support 120 such as to cover the sensor 200b from the Z-direction side. The cover C can be omitted.

Where the sensing device S2 includes the controller 10, the controller 10 may or may not be mounted on the substrate 900. The controller 10 is configured to generate difference data representing differences between characteristic information of the air pressure in the internal space 101 detected by at least one sensing part of the sensor 200a and characteristic information of the acoustic vibration around the sensitive part 100 detected by the at least one sensing part of the sensor 200b.

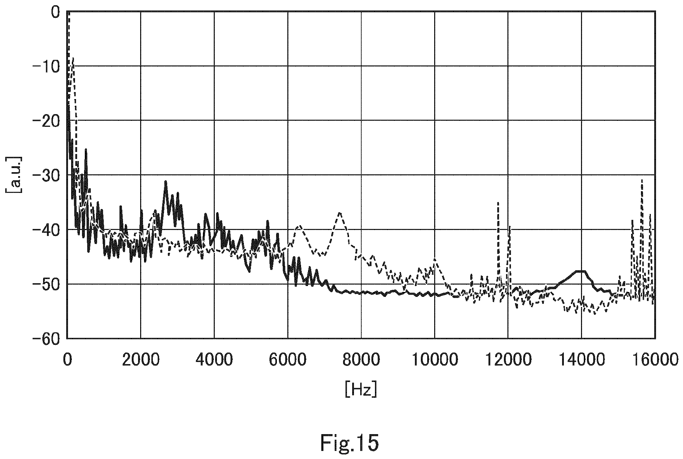

The controller 10 includes, for example, a first analog-to-digital converter (ADC) 11a, a second analog-to-digital converter (ADC) 11b, a first Fourier transformer (FFT) 12a, a second Fourier transformer (FFT) 12b, and a computing part 13. In this case, the first ADC 11a is configured to convert a first electric signal into a digital signal and input the digitized first electric signal into the first Fourier transformer 12a. The first electric signal is a signal outputted from the at least one sensing part of the sensor 200a, e.g., an electric signal from the at least one microphone of the sensor 200a. The first Fourier transformer 12a is configured to Fourier transform (perform a spectral analysis on) the digitized first electric signal to generate a first frequency spectrum (a first spectrum signal for each of a predetermined number of frequency bands) (see Fig. 15). The first frequency spectrum represents the characteristic information of the air pressure in the internal space 101. The second ADC 11b is configured to convert a second electric signal into a digital signal and input the digitized second electric signal into the second Fourier transformer 12b. The second electric signal is a signal outputted from the at least one sensing part of the sensor 200b, e.g., an electric signal from the at least one microphone of the sensor 200b. The second Fourier transformer 12b is configured to Fourier transform (perform a spectral analysis on) the digitized second electric signal to generate a second frequency spectrum (a second spectrum signal for each of a predetermined number of frequency bands) (see Fig. 15). The second frequency spectrum represents the characteristic information of the acoustic vibration around the sensitive part 100. Fig. 15 shows the first spectrum signal as a waveform in a broken line and the second spectrum signal as a waveform in a solid line.

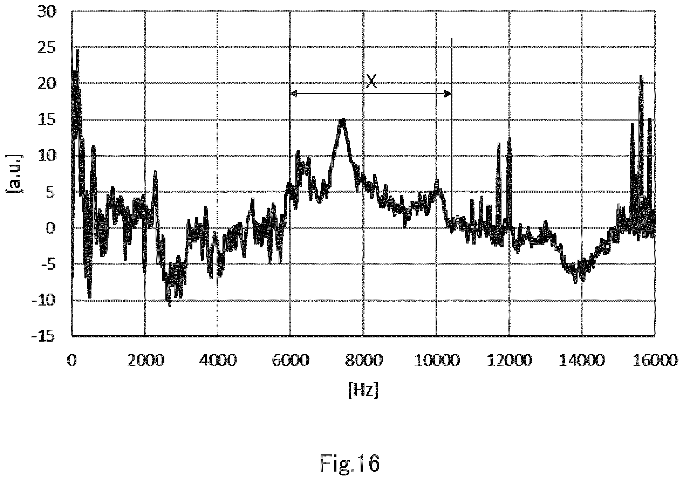

The computing part 13 is configured to generate difference data representing differences between the first frequency spectrum and the second frequency spectrum (difference data between the first spectrum signal and the second spectrum signal for each frequency band). In other words, the computing part 13 is configured to subtract the second frequency spectrum from the first frequency spectrum to generate the difference data (subtract the second spectrum signal from the first spectrum signal for each frequency band to generate a spectrum signal representing the difference for each frequency band) (see Fig. 16). It should be noted that with regard to the waveforms of the first and second spectrum signals shown in Fig. 15 and the waveforms of the difference spectrum signal shown in Fig. 16, these signals have been measured using the sensing device S2, with the cover C removed, of the second embodiment shown in Figs. 11A to 14A.

The computing part 13 may be configured to compare the signal level of the first frequency spectrum with that of the second frequency spectrum (comparing the signal level of the first spectrum signal with that of the second spectrum signal for each frequency band) before generating the difference data. When the computing part 13 determines that the difference between the signal level of the first frequency spectrum and that of the second frequency spectrum exceeds a predetermined threshold (that the difference between the signal level of the first spectrum signal and that of the second spectrum signal for each frequency band exceeds the predetermined threshold), the computing part 13 normalizes the signal levels of the first and second frequency spectrums to the same level (decrease or increase the signal level of one of the first and second frequency spectrums to be the same level as the signal level of the other frequency spectrum) and then generate difference data representing differences between the signal levels of the first and second frequency spectrums that have been normalized to the same level in a manner as described above. The threshold is recorded in a memory (not shown) of the controller 10.

The controller 10 may further include an emphasizing part 14. In this case, the computing part 13 may further be configured to identify a frequency band of fluctuation of the air pressure in the internal space 101, on the basis of the difference data generated in any of the above manners. For example, the computing part 13 may be configured to determine out of the difference data that a frequency band of a differential spectrum signal that is located only in the positive territory (e.g. frequency band "X" indicated in Fig. 16) is identified as a fluctuation frequency band of the air pressure in the internal space 101, and that a frequency band of a differential spectrum signal that is located in both positive and negative territories (e.g. frequency bands other than band "X" indicated in Fig. 16) is identified as a frequency band of fluctuation of the acoustic vibration around the sensitive part 100. The emphasizing part 14 is configured to raise the level of the spectral signal in the frequency band of fluctuation of the air pressure in the internal space 101 identified by the computing part 13, lower the level of the spectrum signal in the frequency band of the acoustic vibration around the sensitive part 100 identified by the computing part 13, and then output the emphasized spectrum signal to the outside of the controller 10 (e.g., to an external electronic device).

The controller 10 may further have a configuration for sensing a change in air pressure in the internal space 101 or calculating the amount of change in air pressure in the internal space 101, on the basis of the difference data generated in any of the above manners, or on the basis of the spectrum signal of the frequency band of fluctuation of the air pressure in the internal space 101 with the raised signal level.

The emphasizing part 14 can be omitted. Where the emphasizing part 14 is omitted, the computing part 13 may be configured to output the difference data generated in any of the above manners to the outside of the controller 10 (e.g., to an external electronic device), or may be configured to output the data resenting the identified frequency band of fluctuation of the air pressure in the internal space 101 to the outside of the controller 10 (e.g., to an external electronic device).

The sensing device S2 described above exhibits the first to fourth technical features and effects of the sensing device S1. Further, where the sensing device S2 includes the controller 10, the controller 10 is configured to generate the difference data representing differences between the characteristic information of the air pressure in the internal space 101 detected by at least one sensing part of the sensor 200a and the characteristic information of the acoustic vibration around the sensitive part 100 detected by at least one sensing part of the sensor 200b. Using the difference data makes it possible to remove the characteristic information of the acoustic vibration around the sensitive part 100, as a noise, from the characteristic information of the air pressure in the internal space 101. This removal contributes to improved accuracy of the sensing device S2 for sensing the sensing target.

The sensing device described above is not limited to the above embodiments, but may be modified in any manner within the scope of the claims. Some examples of specific modification will be described below.

The sensitive part of the invention is only required to be configured such that at least part of the sensitive part may be flexed, by a load applied on the sensitive part or by vibration of the sensitive part, so as to change an air pressure in the internal space. For example, the sensitive part of the invention may receive a load from the Z'-direction side, and the at least part of the sensitive part may flex so as to change the air pressure in the internal space of the sensitive part. Also, the sensing device may be attached to a vibratable sensing target (for example, an electronic device or an electronic component in the electronic device), and the sensitive part may be vibrated by the vibration of the sensing target, or may be vibrated by an earthquake. The vibration applied to the sensitive part 100 in this way is converted into changes in air pressure in the internal space 101 (vibration of gas in the internal space 101). The controller may be configured to detect changes in air pressure in the internal space (i.e., vibration of a sensing target or earthquake) on the basis of an electric signal of the first sensor. Alternatively, the controller may be configured to detect the amount of changes in air pressure in the internal space (i.e., amount of vibration of a sensing target or of an earthquake) on the basis of the amount of changes in the electric signal of the first sensor.

The first sensor of the invention may be provided as a plurality of first sensors. The plurality of first sensors may border the internal space of any of the aspects or be at least partly located in the internal space, and have at least one sensing part. The at least one sensing part may be configured to detect changes in air pressure in the internal space of any of the aspects. Therefore, the or each sensing part is not limited to a microphone described above, but may be a piezoelectric element or the like device whose voltage (signal) changes in response to changes in air pressure in the internal space of any of the above aspects.

The second sensor of the invention may be may be provided as a plurality of second sensors. The plurality of second sensors may face an area around the sensitive part of any of the aspects and have at least one sensing part. The at least one sensing part is only required to be configured to detect acoustic vibration around the sensitive part of any of the aspects.

The first direction of the invention may be any direction corresponding to the longitudinal direction of the flexible portion of the first sensor. The second direction of the invention may be any direction substantially orthogonal to the first direction.

### Reference Signs List

S1, S2: sensing device
   100: sensitive part
      101: internal space
         101a, 101b: first space, second space
      102: opening
      103: housing hole
      110: flexible portion
      120: support
         121: base
            121a: first thread groove
         122: support body
         123: protrusion
      130: pressable portion
   200a: sensor (first sensor)
      210a: housing
         211a: sound hole
      220a: output member
   300: gripper
   400: adapter
      401: through hole
         401a, 401b: housing hole, insertion hole
      410: connecting portion
      420: fixing portion
      430: second thread groove
   500: bolt
   600: seal
   700: cap
800: T-shaped pipe
   810: pipe body
   820: connecting pipe
900: substrate
10: controller
   11a, 11b: first and second analog-to-digital converters
   12a, 12b: first and second Fourier transformers
   13: computing part
   14: emphasizing part

## Claims

1. A sensing device (S1, S2), comprising:
a sensitive part (100) including a sealed internal space (101), at least part of the sensitive part (100) being flexible and configured to be flexed, by a load applied on the sensitive part (100) or by vibration of the sensitive part (100), so as to change an air pressure in the internal space (101); and
a first sensor (200a) bordering the internal space (101) or being at least partly housed in the internal space (101), the first sensor (200a) including at least one sensing part configured to detect changes in the air pressure in the internal space (101).

2. The sensing device (S1, S2) according to claim 1, wherein
the sensitive part (100) further includes an opening (102) communicating with the internal space (101), and
the first sensor (200a) closes the opening (102) and thereby seals the internal space (101).

3. The sensing device (S1, S2) according to claim 2, wherein
the sensitive part (100) includes:
a flexible portion (110) being the at least part of the sensitive part (100), and
a support (120) to support the flexible portion (110), and
the internal space (101) is provided in the flexible portion (110) and the support (120), and the opening (102) is provided in the support (120).

4. The sensing device (S1, S2) according to claim 2, wherein
the sensitive part (100) includes:
a flexible portion (110) being the at least part of the sensitive part (100), and
a support (120) to support the flexible portion (110), and
the internal space (101) and the opening (102) are provided in the flexible portion (110).

5. The sensing device (S1, S2) according to claim 1, wherein
the sensitive part (100) includes:
a flexible portion (110) being the at least part of the sensitive part (100), the flexible portion (110) including the internal space (101) and an opening (102) communicating with the internal space (101), and
a support (120) to support the flexible portion (110), the support (120) closing the opening (102) and thereby sealing the internal space (101).

6. The sensing device (S1, S2) according to any one of claims 3 to 5, wherein
the support (120) includes a base (121) and a support body (122), the support body (122) extending from the base (121) to one side (Z') in a first direction (Z-Z'), and
the flexible portion (110) is joined to the support body (122) in the first direction (Z-Z') and extends from the support body (122) to the one side (Z') in the first direction (Z-Z').

7. The sensing device (S1, S2) according to claim 6, wherein
the internal space (101) includes a distal portion on the one side (Z') in the first direction (Z-Z') and a basal portion on the other side (Z) in the first direction (Z-Z'), and
the basal portion is larger than the distal portion in area of a cross-section in a second direction (X-X'), the second direction (X-X') being substantially orthogonal to the first direction (Z-Z').

8. The sensing device (S1, S2) according to any one of claims 3 to 7, wherein the flexible portion (110) is made of an elastic material and fits over the support (120).

9. The sensing device (S1, S2) according to claim 6 or 7, further comprising an adapter (400), wherein
the adapter (400) is fixed directly or indirectly to the base (121) and connectable to a connection target (800),
the adapter (400) is provided with a through hole (401) extending through the adapter (400) in the first direction (Z-Z'), and
the support body (122) is housed in the through hole (401) of the adapter (400), and at least part of the flexible portion (110) protrudes from the through hole (401) of the adapter (400) to the one side (Z') in the first direction (Z-Z').

10. The sensing device (S1, S2) according to claim 6 or 7, further comprising an adapter (400), wherein
the adapter (400) is fixed directly or indirectly to the base (121) and connectable to a connection target (800),
the adapter (400) is provided with a through hole (401) extending through the adapter (400) in the first direction (Z-Z'),
the sensitive part (100) further includes a pressable portion (130) extending from the flexible portion (110) to the one side (Z') in the first direction (Z-Z'), and
the sensitive part (100) has either arrangement (1) or (2):
(1) the support body (122) is housed in the through hole (401) of the adapter (400), and at least part of the flexible portion (110) and the pressable portion (130) protrude from the through hole (401) of the adapter (400) to the one side (Z') in the first direction (Z-Z'), or
(2) the support body (122) and the flexible portion (110) are housed in the through hole (401) of the adapter (400), and the pressable portion (130) protrudes from the through hole (401) of the adapter (400) to the one side (Z') in the first direction (Z-Z').

11. The sensing device (S1, S2) according to any one of claims 9 to 10, further comprising a seal (600) securely sandwiched in the first direction (Z-Z') between the base (121) and the adapter (400).

12. The sensing device (S1, S2) according to claim 9, wherein
the adapter (400) includes a connecting portion (410) connectable to a connecting pipe (820) of a T-shaped pipe (800), the T-shaped pipe (800) being the connection target, and
the at least part of the flexible portion (110) is configured to pass through the connecting pipe (820) in a non-contact manner, with the connecting portion (410) of the adapter (400) connected to the connecting pipe (820), and to receive a load from fluid flowing in the T-shaped pipe (800).

13. The sensing device (S1, S2) according to claim 10, wherein
the adapter (400) includes a connecting portion (410) connectable to a connecting pipe (820) of a T-shaped pipe (800), the T-shaped pipe (800) being the connection target, and
the pressable portion (130) is configured to pass through the connecting pipe (820) in a non-contact manner, with the connecting portion (410) of the adapter (400) connected to the connecting pipe (820), and to receive a load from fluid flowing in the T-shaped pipe (800).

14. The sensing device (S1, S2) according to any one of the preceding claims, further comprising:
a second sensor (200b) including at least one sensing part configured to detect acoustic vibration generated around the sensitive part (100); and
a controller (10) configured to generate difference data representing differences between characteristic information of the air pressure detected by the at least one sensing part of the first sensor (200a) and characteristic information of the acoustic vibration detected by the at least one sensing part of the second sensor (200b).

15. The sensing device (S1, S2) according to claim 14, wherein the controller (10) includes:
a first Fourier transformer (12a) configured to Fourier transform an electric signal outputted from the at least one sensing part of the first sensor (200a) and thereby generate a first frequency spectrum,
a second Fourier transformer
(12b) configured to Fourier transform an electric signal outputted from the at least one sensing part of the second sensor (200b) and thereby generate a second frequency spectrum, and
a computing part (13) configured to obtain differences between the first frequency spectrum and the second frequency spectrum and thereby generate the difference data. emphasize
